# EUROPÄISCHE PATENTSCHRIFT

(11) **EP 4 479 203 B1**
(45) Veröffentlichungstag und Bekanntmachung des Hinweises auf die Patenterteilung: **15.07.2026**
(21) Anmeldenummer: 23705254.3
(22) Anmeldetag: 14.02.2023
(51) Int. Cl.: B22C 9/08, B22D 43/00, C04B 35/14, C04B 35/18, C04B 35/42, C04B 35/63, C04B 41/00, C04B 41/48, C04B 41/83, C04B 35/117, C04B 35/486, C04B 35/632, C04B 111/00, C04B 35/634

(54) **FILTERELEMENT FÜR EINE STRÖMUNGSBERUHIGUNG UND REINIGUNG EINER BEIM GIESSEN ERHALTENEN SCHMELZE SOWIE EIN VERFAHREN ZUR HERSTELLUNG EINES FILTERELEMENTS**
FILTER ELEMENT FOR FLOW STABILIZATION AND CLEANING A MELT OBTAINED DURING CASTING, AND A METHOD FOR MANUFACTURING A FILTER ELEMENT
ÉLÉMENT DE FILTRATION POUR LA STABILISATION DE L'ÉCOULEMENT ET LE NETTOYAGE D'UNE COULÉE OBTENUE PAR UN PROCÉDÉ DE MOULAGE, ET PROCÉDÉ DE FABRICATION D'UN ÉLÉMENT DE FILTRATION

(30) Priorität: 16.02.2022 DE 102022201617
(43) Veröffentlichungstag der Anmeldung: 25.12.2024
(73) Patentinhaber: Drache Umwelttechnik GmbH, 65582 Diez (DE)
(72) Erfinder: BAUMANN, Benedict, 09599 Freiberg (DE); SALEWSKI, Christoph, 09599 Freiberg (DE); WOLF, Gotthard, 40822 Mettmann (DE); KESSLER, Andreas, 01723 Wilsdruff (DE)
(74) Vertreter: Blumbach · Zinngrebe Patentanwälte PartG mbB
(86) Internationale Anmeldenummer: PCT/EP2023/053580
(87) Internationale Veröffentlichungsnummer: WO 2023/156367

(56) Entgegenhaltungen:
- EP-B1- 3 325 428
- DE-A1- 102011 109 681
- DE-A1- 102017 216 964
- JP-A- 2004 025 276
- RENLIANG XU ET AL: "Comparison of sizing small particles using different technologies", POWDER TECHNOLOGY, ELSEVIER, BASEL (CH), vol. 132, no. 2-3, 24 June 2003 (2003-06-24), pages 145 - 153, XP002711749, ISSN: 0032-5910, DOI: 10.1016/S0032-5910(03)00048-2

## Beschreibung

Die Erfindung betrifft ein Filterelement für eine Strömungsberuhigung und Reinigung einer beim Gießen verwendeten Schmelze sowie ein Verfahren zur Herstellung eines Filterelements.

Im Bereich der Metallschmelzefiltration gibt es diverse Ansätze um die Filtrationseffizienz der dafür eingesetzten Filter zu steigern. In den meisten Fällen wird der Filterwerkstoff modifiziert oder durch andere Stoffe substituiert. So beschreibt bspw. DE 10 2011 109 681 A1 eine Steigerung der Filtrationseffizienz von "gängigen Metallschmelze-Filtergeometrien" durch eine aktive Oberflächenbeschichtung. Unter "gängiger Metallschmelze-Filtergeometrie" werden offenzellige Schaumkeramikgeometrien, Wabenkörpergeometrien, Spaghetti-Filtergeometrien, gelochte Filtergeometrien und Fasergewebefilter beschrieben, die alle keiner definierten Filter- und Strömungsstruktur entsprechen, um die Schmelze bestmöglich zu laminarisieren. In DE 10 2011 109 682 A1 sowie DE 10 2020 000 969 A1 wird der Einsatz von kohlenstoffgebundenen Materialien für die Eisen- bzw. Aluminiumschmelzefiltration beschrieben. Die Filter werden dabei als "geschäumte Strukturen" definiert. Auch die DE 10 2011 109 684 A1 zur Entfernung von Gasen aus Schmelzen mittels Filter, DE 2016 106 708 A1 zur Anwendung von Filtern für die kontinuierliche Metallschmelzefiltration sowie DE 10 2018 201 577 A1 zur Entfernung von Einschlüssen unterschiedlicher chemischer Zusammensetzung mittels keramischer Metallschmelze-Hybrid-Filter, beschreiben Filter mit einer geschäumten bzw. nicht eindeutig definierten Filterstruktur.

In WO 2017/008092 A1 wird ein Verfahren zur Herstellung von Metallfiltern aus Molybdän oder Wolfram beschrieben. Dabei wird ein Molybdän- oder Wolframpulver mit unterschiedlicher Körnung versintert wobei die Sinterbrücken für die Festigkeiten des Filters sorgen und die nicht versinterten Bereiche die Poren für die Metallschmelzefiltration darstellen. Auch bei dieser Variante der Filterherstellung gibt es keine eindeutig definierten Filter- bzw. Strömungsstrukturen. Bei der in EP 3 325 428 B1 beschriebenen technischen Lösung wird ein Filterelement, das aus dreidimensionalen geometrischen Käfigen aufgebaut ist und die Aufgabe der Schmelzereinigung erfüllen soll, beschrieben. Das Filterelement wird hergestellt indem entweder Thermoplast gedruckt und im Anschluss das gedruckte Gerüst mit keramischem Schlicker überzogen sowie gebrannt wird, oder indem ein keramischer Schlicker gedruckt wird. Zwar kann es bei diesen Filterelementen definierte Filterstrukturen geben, allerdings erfüllen diese nur die Aufgabe der Schmelzereinigung und nicht der Laminarisierung. Des Weiteren bestehen die Filterelemente aus einer gesinterten Keramik, die nach der Nutzung thermisch nicht zerfällt und daher nicht oder nur sehr eingeschränkt recycelt werden kann.

Aus der Druckschrift DE 10 2011 109681 A1 sind keramische Filter für die Metallschmelzfiltration sowie Verfahren zu deren Herstellung bekannt. Auch EP 3 325 428 B1 offenbart Filterelemente zum Filtern von Metallschmelzen. DE 10 2017 216964 A1 betrifft poröse keramische Filterstrukturen für die Aluminiumschmelzfiltration. JP 2004 025276 A befasst sich ebenso mit keramischen Filtern für den Hochtemperatureinsatz.

Der vorliegenden Erfindung liegt die Aufgabenstellung zugrunde, dass definierte Filter- und Strömungsstrukturen realisiert werden können, die eine Umwandlung von turbulenter in weitgehend laminare Strömung flüssiger Schmelze durch Strömungsberuhigung und/oder eine effektive Zurückhaltung von Verunreinigungen, die im geschmolzenen Metall enthalten sein können, sowie eine einfache und umweltschonende Entsorgung gebrauchter Filterelemente ermöglichen.

Erfindungsgemäß wird diese Aufgabe mit einem Filterelement, das die Merkmale des Anspruchs 1 aufweist, gelöst. Anspruch 5 betrifft ein Herstellungsverfahren. Vorteilhafte Ausgestaltungen und Weiterbildungen der Erfindung können mit in abhängigen Ansprüchen bezeichneten Merkmalen realisiert werden.

Ein erfindungsgemäßes Filterelement ist mit einer dreidimensionalen Stegstruktur mit Durchbrechungen als Strömungskanäle, durch die flüssige Schmelze geführt wird, ausgebildet. Flüssige Schmelze kann durch die mit der Stegstruktur zwischen Stegen ausgebildeten Durchbrechungen strömen und dabei können die Stege so gefertigt sein, dass die Strömung durch Strömungsberuhigung laminarisiert wird und Verunreinigungen, z.B. Oxide, mit dem Filterelement zurückgehalten werden können.

Die Stegstruktur ist mit Partikeln aus einem Werkstoff, der als Formwerkstoff in der Gießereitechnik einsetzbar ist, und mit einem Bindemittel ausgebildet. Die Partikel sind dabei stoffschlüssig mit dem Bindemittel miteinander verbunden und die Stege an ihrer Oberfläche mit einer Beschichtung eines polymeren Harzes versehen.

Es können bevorzugt Partikel eingesetzt werden, die aus überwiegend SiO₂, überwiegend Al₂O₃, überwiegend Alumosilikat, mit Cer stabilisiertem ZrO₂ oder Chromit gebildet sind. Dabei sollte unter überwiegend ein Anteil von mindestens 80 Vol.-%, besonders bevorzugt von mindestens 90 Vol.-% und ganz besonders bevorzugt von mindestens 95 Vol.-% verstanden sein.

So kann man Quarzsand oder Chromit, das überwiegend aus Chrom- und Eisenoxid besteht oder auch solche Mineralien einsetzen, die man auch als Mullit bezeichnet.

Die Partikel können mit einem Furanharzbinder, einem phenolharzbasierten Binder oder einem anorganischen Binder als Bindemittel stoffschlüssig verbunden sein. Bei einem Furanharzbinder kann es sich um einen furfurylalkohol-basierten Binder handeln. Phenolharzbasierte Binder können heiß (z.B. ein mit Säure härtender Phenol-Resolbinder) oder kalt härtend sein. Ein anorganischer Binder kann ein wasserbasierter Alkalisilikatbinder sein.

Je nach eingesetztem Bindemittel kann die Härtung durch eine thermische Behandlung, bei der eine ausreichend hohe Temperatur erreicht wird, Bestrahlung mit jeweils geeigneter elektromagnetischer Strahlung oder durch Zugabe einer bindemittelspezifischen Härterkomponente in das Bindemittel erreicht werden.

Die Beschichtung, mit der die Oberflächen von Stegen überzogen wird, kann aus polymerem Harz, wie bspw. Epoxidharz sein. Erfindungsgemäß ist die Beschichtung geschlossen und mit einer Schichtdicke von mindestens 50 µm ausgebildet.

Es sollte ein Anteil an Bindemittel, mit dem die Partikel stoffschlüssig verbunden sind, im Bereich 1 Vol.-% bis 5 Vol.-% in Bezug zur Menge an stoffschlüssig miteinander verbundenen Partikeln eingehalten sein. Bevorzugt liegt der Anteil bei ca. 2 Vol.-%.

Die Stege der Stegstruktur sollten mit Partikeln mit einer mittleren Partikelgröße d₅₀ im Bereich 63 µm bis 1000 µm gebildet sein.

An den Strömungskanäle bildenden Durchbrechungen sollten offene Taschen zur Aufnahme von in einer Schmelze enthaltenden Verunreinigungen in vorab definierter Position und Dimensionierung ausgebildet sein. Dies kann mit Möglichkeiten der additiven Fertigung, auf die nachfolgend näher eingegangen werden soll, erreicht werden, indem eine entsprechend gesteuerte Fertigung durchgeführt wird.

Prinzipiell wird bei der Herstellung so vorgegangen, dass Stege mit Partikeln aus einem Werkstoff, der als Formwerkstoff in der Gießereitechnik einsetzbar ist, durch lokal definierte stoffschlüssige Verbindung der Partikel mit einem Bindemittel schichtweise ausgebildet werden. Mit dem Beginn des Aushärtens oder nach dem Aushärten des Bindemittels wird die Oberfläche der Stege mit einer Beschichtung eines polymeren Harzes überzogen. Das Aushärten kann mit dem Ausbilden einer Stegstruktur in einer Schicht beginnen und im Anschluss daran fortgeführt werden, bis eine vollständige Aushärtung erreicht worden ist. Dabei kann eine nachfolgende Schicht strukturiert ausgebildet werden, wenn noch keine vollständige Aushärtung erreicht worden ist. In diesen Fällen kann bevorzugt eine Härterkomponete gemeinsam mit dem Bindemittel appliziert werden oder es erfolgt eine Bestrahlung mit geeigneter elektromagnetsicher Strahlung mit der eine Aushärtung erreicht werden kann. Alternativ kann aber auch eine thermische Behandlung bei einer für eine Aushärtung des Bindemittels ausreichenden Temperatur durchgeführt werden. Eine thermische Behandlung kann dabei an einem Grünkörper, der bereits die dreidimensionale Grundstegstruktur eines Filterelements aufweist, erfolgen.

Dabei kann einmal so vorgegangen werden, dass bei einer pulverbettbasierten additiven Fertigung die losen Partikel oder Partikel, die bereits einen Teil des Binders beinhalten oder mit Binder beschichtet sein können, als Schicht auf eine Bauplattform aufgebracht und Partikel der jeweils obersten Schicht lokal definiert mit dem Bindemittel beaufschlagt und dadurch Partikel lokal definiert in der Ebene der jeweiligen Schicht stoffschlüssig miteinander verbunden werden. Die Applizierung des Bindemittels sollte dabei dosiert und zweidimensional gesteuert entlang der Oberfläche einer jeweiligen Schicht, die mit losen Partikeln ausgebildet worden war, erfolgen.

Nach Ausbildung einer vorgegebenen geometrischen Stegstruktur für die Ebene einer jeweiligen Schicht durch stoffschlüssige Verbindung von Partikeln mit Bindemittel wird dann die Bauplattform um eine Schichtdicke abgesenkt und eine neue Schicht an losen Partikeln aufgebracht, bei der wieder Partikel stoffschlüssig mit Bindemittel verbunden werden, um eine vorgegebene geometrische Stegstruktur in dieser Ebene auszubilden.

Die Verfahrensschritte der Schichtaufbringung, lokal definierten stoffschlüssigen Verbindung von Partikeln mit dem Bindemittel und das Absenken der Bauplattform wird dabei so oft wiederholt, bis die vorgegebene dreidimensionale Stegstruktur des Filterelements ausgebildet worden ist.

Im Anschluss daran werden zuerst lose nicht stoffschlüssig verbundene Partikel entfernt und dann wird die Beschichtung mit einem polymeren Harz auf die Oberflächen der Stege aufgebracht. Die Beschichtung kann mittels Tauchen, Fluten oder Besprühen ausgebildet werden.

Alternativ zu einer pulverbettbasierten Fertigung kann ein unbeschichtetes Filterelement durch reines Drucken ausgebildet werden. Dabei wird eine Paste/Suspension, die mit den Partikeln und dem Bindemittel sowie ggf. mit einer Härterkomponente gebildet ist, durch mindestens eine Düse schichtweise so appliziert bis die dreidimensionale Stegstruktur mit den Stegen und Durchbrechungen als Strömungskanäle ausgebildet sind und dann wird die Beschichtung mit einem polymeren Harz auf die Oberflächen der Stege aufgebracht. Eine Härtung erfolgt dabei in Abhängigkeit des jeweiligen Bindemittels entweder nach der Ausbildung einer Schicht oder Lage der Paste/Suspension oder auch erst nach dem Aufbau einer erhaltenen vollständigen Stegstruktur. Die Paste/Suspension kann dabei dosiert entweder in Form einzelner Tropfen oder in Form von Filamenten appliziert werden. Dabei wird die mindestens eine Düse entsprechend durch zweidimensionale Bewegung ihrer Austrittsöffnung positioniert und der applizierte Massenstrom an Suspension wird entsprechend der Geometrie und Dimensionierung der Stegstruktur lokal definiert gesteuert.

So kann man beispielswiese so vorgehen, dass man einen handelsüblichen 20 ppi Schaumkeramikfilter (50 mm x 50 mm x 20 mm) mittels Mikro-Computertomographie einscannt, um ein originalgetreues CAD-Modell eines Schaumkeramikfilters zu erhalten. Dieses CAD-Modell wird im Anschluss mittels Sand und Bindemittel dreidimensional additiv gefertigt. Dabei wird ein mit Aktivator (p-Toluolsulfonsäure) versetzter Quarzsand (SiO₂: >99,1 Vol.-%; mittlere Partikelgröße d₅₀ 0,14 mm) schichtweise auf eine Baufplattform aufgetragen und anschließend mit Bindemittel bedruckt, der unter der Bildung von Furanharz aushärtet (Bindemittelgehalt: 2 Vol.-%). Zur Steigerung der mechanischen und thermischen Festigkeit wird die gedruckte Filtergeometrie in Form einer dreidimensionalen Stegstruktur im Anschluss mit einem polymeren Harz an den Oberflächen der Stege imprägniert.

Das so erhaltene Filterelement wurde im Anschluss durch eine Prüfmethode zur Bestimmung der Temperaturschockbeständigkeit bei Aluminiumschmelzen auf sein Thermoschockverhalten sowie auf die beim Gießen von Aluminium auftretenden dynamischen und thermischen Belastungen hin untersucht. Das Filterelement hat den Belastungen dabei standgehalten und ist nicht gebrochen. Des Weiteren konnte an hellen Stellen am Filterelement bereits dessen thermische Zersetzung erkannt werden, welche dazu führt, dass nach dem Gebrauch des Filterelements, dieses sich in seine Grundbestandteile zerlegt und es außerdem möglich ist, Reste an Schmelzgut wieder zurück zu gewinnen.

In dem hier beschriebenen Vorversuch wurde für die Vorlage zur Steuerung der additiven Fertigung eine Schaumkeramikfilterstruktur gewählt, da diese aufgrund der geringen Stegdicke von 0,5 mm als Worst Case für die auftretenden mechanischen und thermischen Kräfte fungiert.

Gießversuche mit einer Aluminiumschmelze haben gezeigt, dass trotz der geringen Stegdicken ein additiv gefertigtes Filterelement, das im Wesentlichen aus den gebundenen Partikeln eines Formstoffs besteht, den zu erwartenden Belastungen standhält und dass ebenfalls eine Schmelzereinigung erreicht werden kann. Des Weiteren konnte in weiteren Versuchen nachgewiesen werden, dass sich ein erfindungsgemäßes Filterelement nach Gebrauch thermisch zersetzt und somit vollständig vom erstarrten Aluminium und am Filterelement bei Gebrauch festgesetzten Verunreinigungen getrennt werden kann. Mit der Erfindung können Filterelemente mit definierten Rückhalte- und/oder Strömungsstrukturen zur Verfügung gestellt werden. Anwendungsbeispiele haben gezeigt, dass selbst sehr filigrane dreidimensionale Stegstrukturen realisierbar sind und dass diese Strukturen, nach einer Imprägnierung mit polymerem Harz an den Stegoberflächen, den auftretenden Belastungen zumindest beim Aluminiumguss standhalten.

Mit der Erfindung können strömungsoptimierte Filtergeometrien mittels additiver Fertigung mit einem vorteilhaften Filterelementwerkstoff zur Verfügung gestellt werden. Es ist so möglich, ein Filterelement nach verbesserten strömungstechnischen Gesichtspunkten auszulegen und herzustellen. Durch die Gestaltungsfreiheit und den reproduzierbaren Herstellungsvorgang werden die Nachteile eines Schaumkeramikfilters vermieden. Bei dem Verarbeiten des Filterelementmaterials werden lose, schüttfähige Partikel schichtweise mit einem Bindemittel benetzt bzw. versetzt. Es kann so eine ausreichende Festigkeit durch den stoffschlüssigen Verbund erreicht werden. Nachdem Einsatz und einem Durchströmen mit flüssiger Schmelze kann das Filterelement zumindest teilweise zerfallen, was durch thermische Zersetzung des Bindemittels erfolgt. Die stoffschlüssige Verbindung von Partikeln wird dabei zumindest zu einem großen Teil gelöst und die genutzten wieder in loser Form vorliegenden Partikel können in den Werkstoffkreislauf einer Gießerei eingebracht werden. Es entstehen keine zu deponierenden Stoffe.

Mit der Erfindung bieten sich Möglichkeiten für eine optimierte Gestaltung bzw. Auslegung der gesamten Filterelementgeometrie, was insbesondere die Dimensionierung von Stegen, Durchbrechungen mit der Ausrichtung von mit Durchbrechungen gebildeten Strömungskanälen durch die flüssige Schmelze so strömen kann, dass eine laminare Strömung nach dem Durchtritt durch ein Filterelement und eine möglichst große Rückhaltefähigkeit für Verunreinigungen erreicht werden können. Somit ist es möglich, ein Filterelement mit definierten Strömungskanälen sowie Abscheidetaschen zu entwickeln und real zur Verfügung zu stellen. Die reproduzierbare und gestaltungsfreie Verarbeitung des Filtermaterials ist hierbei ein neues, noch nicht am Markt etabliertes Verfahren.

Recherchen haben ergeben, dass es nicht bekannt ist, dass solche Filterelementstrukturen aktuell angewendet oder entwickelt werden. Die Entwicklung von additiv so gefertigten Filterelementen ist von einem hohen Innovationsgrad geprägt.

Die Erfindung bietet auch ökologische und ökonomische Vorteile infolge der Verwendung der neuen Filterstrukturen. Im Vergleich zu Schaumkeramikfiltern wird bei der additiven Herstellung der strömungsoptimierten, Filterstrukturen wesentlich weniger Energie benötigt, da der Sintervorgang des keramischen Schlickers ersatzlos wegfällt. Dadurch ist die Herstellung wesentlich umweltfreundlicher und Gießereien können mit der Verwendung der erfindungsgemäßen Filterelemente den CO₂-Footprint verkleinern. Da ein additiv gefertigtes Filterelement durch das thermische Einwirken der Schmelze nach dem Abguss zerfällt und der partikelförmige Werkstoff dem Wertstoffkreislauf zurückgeführt werden kann, können Deponie- sowie Transportkosten gespart werden. Des Weiteren sind die additiv gefertigten Filterelemente sowohl in der Großserien- als auch Kleinserienproduktion wesentlich günstiger in der Herstellung als Schaumkeramikfilter. Ein weiterer wesentlicher Vorteil der Entwicklung besteht darin, dass die Filterstrukturen ihrem jeweiligen Einsatzgebiet entsprechend spezifisch ausgelegt werden können.

Die einzusetzenden Ausgangswerkstoffe bzw. -materialien verursachen nur geringe Kosten und es ist eine verhältnismäßig kleine Energiemenge für die Herstellung der Filterelemente erforderlich.

## Patentansprüche

1. Filterelement für eine Strömungsberuhigung und Reinigung einer beim Gießen verwendeten Schmelze, die durch das Filterelement hindurchgeführt wird, wobei das Filterelement als dreidimensionale Stegstrukturen mit Durchbrechungen als Strömungskanäle, durch welche flüssige Schmelze geführt wird, ausgebildet ist und
Stege der Stegstruktur mit Partikeln aus einem Werkstoff, der als Formwerkstoff in der Gießereitechnik einsetzbar ist, und mit einem Bindemittel ausgebildet sind, mit dem die Partikel stoffschlüssig miteinander verbunden sind, und die Stege an ihrer Oberfläche mit einer Beschichtung eines polymeren Harzes versehen sind, wobei die Beschichtung geschlossen und mit einer Schichtdicke von mindestens 50 µm ausgebildet ist.

2. Filterelement nach Anspruch 1, **dadurch gekennzeichnet, dass** die Partikel aus überwiegend SiO₂, überwiegend Al₂O₃, überwiegend Alumosilikat, mit Cer stabilisiertem ZrO₂ oder Chromit gebildet und/oder die Partikel mit einem Furanharzbinder, einem phenolharzbasierten Binder oder einem anorganischen Binder als Bindemittel stoffschlüssig verbunden sind.

3. Filterelement nach einem der vorhergehenden Ansprüche, **dadurch gekennzeichnet, dass** ein Anteil an Bindemittel, mit dem die Partikel stoffschlüssig verbunden sind, im Bereich 1 Vol.-% bis 5 Vol.-% in Bezug zur Menge an stoffschlüssig miteinander verbundenen Partikeln eingehalten ist.

4. Filterelement nach einem der vorhergehenden Ansprüche, **dadurch gekennzeichnet, dass** an den Strömungskanäle bildenden Durchbrechungen offene Taschen zur Aufnahme von in einer Schmelze enthaltenden Verunreinigungen in vorab definierter Position und Dimensionierung ausgebildet sind.

5. Verfahren zur Herstellung eines Filterelements nach einem der vorhergehenden Ansprüche, **dadurch gekennzeichnet, dass** Stege Partikeln aus einem Werkstoff, der als Formwerkstoff in der Gießereitechnik einsetzbar ist, durch lokal definierte stoffschlüssige Verbindung der Partikel mit einem Bindemittel schichtweise ausgebildet werden und mit dem Beginn des Aushärtens oder nach dem Aushärten des Bindemittels die Oberfläche der Stege mit einer Beschichtung eines polymeren Harzes überzogen wird.

6. Verfahren nach dem vorhergehenden Anspruch, **dadurch gekennzeichnet, dass** die losen Partikel oder Partikel, die bereits Binder beinhalten oder mit Binder beschichtet sind, als Schicht auf eine Bauplattform aufgebracht und Partikel der jeweils obersten Schicht lokal definiert mit dem Bindemittel beaufschlagt und dadurch Partikel lokal definiert in der Ebene der jeweiligen Schicht stoffschlüssig miteinander verbunden werden, und
nach Ausbildung einer vorgegebenen geometrischen Stegstruktur für die Ebene einer jeweiligen Schicht durch stoffschlüssige Verbindung von Partikeln mit Bindemittel die Bauplattform um eine Schichtdicke abgesenkt und eine neue Schicht an losen Partikeln aufgebracht wird, bei der wieder Partikel stoffschlüssig mit Bindemittel verbunden werden, um eine vorgegebene geometrische Stegstruktur in dieser Ebene auszubilden, wobei
die Verfahrensschritte der Schichtaufbringung, lokal definierte stoffschlüssige Verbindung von Partikeln mit dem Bindemittel und das Absenken der Bauplattform so oft wiederholt werden, bis die vorgegebene dreidimensionale Stegstruktur des Filterelements ausgebildet worden ist und im Anschluss daran zuerst lose nicht stoffschlüssig verbundene Partikel entfernt und
dann die Beschichtung mit einem polymeren Harz auf die Oberflächen der Stege aufgebracht wird, welches unter Normalbedingungen und/oder durch thermische Behandlung und/oder Bestrahlung mit elektromagnetischer Strahlung und/oder durch Zugabe eines Katalysators aushärtet.

7. Verfahren nach Anspruch 5, **dadurch gekennzeichnet, dass** eine Paste, die mit den Partikeln und dem Bindemittel gebildet ist, durch mindestens eine Düse schichtweise so appliziert wird bis die dreidimensionale Stegstruktur mit den Stegen und Durchbrechungen als Strömungskanäle ausgebildet sind und dann die Beschichtung mit einem polymeren Harz auf die Oberflächen der Stege aufgebracht wird.

## Claims

1. A filter element for flow stabilization and cleaning of a melt which is used during casting and is passed through the filter element, wherein the filter element is in the form of three-dimensional ligament structures with openings as flow channels, through which liquid melt is guided, and
wherein ligaments of the ligament structure are formed using particles of a material that can be used as a moulding material in foundry technology, and using a binding agent by which the particles are materially bonded to one another, and the ligaments, on their surface, are provided with a coating of a polymeric resin, wherein the coating is closed and is formed with a layer thickness of at least 50 µm.

2. The filter element according to claim 1, **characterised in that** the particles are formed of predominantly SiO₂, predominantly Al₂O₃, predominantly aluminosilicate, cerium-stabilized ZrO₂, or chromite; and/or
the particles are materially bonded by a furan resin binder, a phenolic resin-based binder or an inorganic binder as binding agent.

3. The filter element according to any one of the preceding claims, **characterised in that** a proportion of binding agent, by which the particles are materially bonded to one another, is maintained in the range from 1 vol.% to 5 vol.% relative to the amount of particles materially bonded to one another.

4. The filter element according to any one of the preceding claims, **characterised in that** at the openings forming the flow channels, open pockets are formed in predefined position and dimensioning for receiving impurities contained in a melt.

5. A method for producing a filter element according to any one of the preceding claims, **characterised in that** ligaments are formed layer by layer using particles of a material that can be used as a moulding material in foundry technology, by material bonding of the particles with a binding agent in a locally defined manner, and the surface of the ligaments is coated with a coating of a polymeric resin at the beginning of the curing or after the curing of the binding agent.

6. The method according to the preceding claim, **characterised in that** the loose particles or particles that already contain binder or are coated with binder are applied as a layer onto a build platform, and the binding agent is applied to particles of the respective uppermost layer in a locally defined manner and thereby particles are materially bonded to one another in the plane of the respective layer in a locally defined manner; and
after formation of a predefined geometric ligament structure for the plane of a respective layer by material bonding of particles using binding agent, the build platform is lowered by one layer thickness and a new layer of loose particles is applied, in which again particles are materially bonded by binding agent in order to form a predefined geometric ligament structure in this plane; wherein
the method steps of layer application, locally defined material bonding of particles using the binding agent and lowering of the build platform are repeated as often as necessary until the predefined three-dimensional ligament structure of the filter element has been formed, and thereafter, first, any loose, non-materially-bonded particles are removed, and
thereafter the coating of a polymeric resin is applied onto the surfaces of the ligaments, which cures under normal conditions and/or by thermal treatment and/or irradiation with electromagnetic radiation and/or by addition of a catalyst.

7. The method according to claim 5, **characterised in that** a paste formed from the particles and the binder is applied, layer by layer, through at least one nozzle until the three-dimensional ligament structure comprising the ligaments and the openings as flow channels is formed, and then the coating of a polymeric resin is applied to the surfaces of the ligaments.

## Revendications

1. Élément de filtration pour l'apaisement de l'écoulement et l'épuration d'une masse fondue utilisée lors de la coulée et guidée à travers l'élément de filtration, l'élément de filtration étant réalisé sous forme de structures tridimensionnelles à ligaments comportant des ouvertures comme canaux d'écoulement, à travers lesquels la masse fondue liquide est guidée, et les ligaments de la structure à ligaments étant réalisés avec des particules d'un matériau utilisable comme matériau de moulage dans la technique de fonderie, et avec un agent de liaison par lequel les particules sont liées entre elles par liaison de matière, et les ligaments étant pourvus sur leur surface d'un revêtement d'une résine polymère, le revêtement étant continu et formé avec une épaisseur d'au moins 50 µm.

2. Élément de filtration selon la revendication 1, **caractérisé en ce que** les particules sont formées majoritairement de SiO₂, majoritairement de A1₂0₃, majoritairement d'aluminosilicate, de ZrO₂ stabilisé au cérium ou de chromite; et/ou **en ce que** les particules sont liées par liaison de matière par un liant à base de résine furanique, un liant à base de résine phénolique ou un liant inorganique en tant qu'agent de liaison.

3. Élément de filtration selon l'une quelconque des revendications précédentes, **caractérisé en ce qu'**une proportion d'agent de liaison, par lequel les particules sont liées entre elles par liaison de matière, est maintenue dans la plage de 1 % en volume à 5 % en volume par rapport à la quantité de particules liées entre elles par liaison de matière.

4. Élément de filtration selon l'une quelconque des revendications précédentes, **caractérisé en ce que**, au niveau des ouvertures formant les canaux d'écoulement, des poches ouvertes sont formées en position et dimension prédéfinies pour recevoir des impuretés contenues dans une masse fondue.

5. Procédé de fabrication d'un élément de filtration selon l'une quelconque des revendications précédentes, **caractérisé en ce que** des ligaments sont formés couche par couche à partir de particules d'un matériau utilisable comme matériau de moulage dans la technique de fonderie, par liaison de matière localement définie des particules avec un agent de liaison, et **en ce que** la surface des ligaments est revêtue d'un revêtement d'une résine polymère au début de la durcissement ou après le durcissement de l'agent de liaison.

6. Procédé selon la revendication précédente, **caractérisé en ce que** les particules libres ou les particules qui contiennent déjà un liant ou sont revêtues de liant sont appliquées sous forme de couche sur une plateforme de construction, et l'agent de liaison est appliqué de manière localement définie sur les particules de la couche supérieure respective, de sorte que des particules sont liées entre elles par liaison de matière de manière localement définie dans le plan de la couche respective; et après la formation d'une structure à ligaments géométrique prédéfinie pour le plan d'une couche respective par liaison de matière des particules au moyen de l'agent de liaison, la plateforme de construction est abaissée d'une épaisseur de couche et une nouvelle couche de particules libres est appliquée, dans laquelle à nouveau des particules sont liées par liaison de matière au moyen de l'agent de liaison afin de former une structure à ligaments géométrique prédéfinie dans ce plan;
les étapes du procédé d'application de couche, de liaison de matière localement définie des particules au moyen de l'agent de liaison et d'abaissement de la plateforme de construction étant répétées autant de fois que nécessaire jusqu'à ce que la structure tridimensionnelle à ligaments prédéfinie de l'élément de filtration soit formée, et ensuite, d'abord, les particules libres non liées par liaison de matière sont éliminées, et
ensuite le revêtement comprenant une résine polymère est appliqué sur les surfaces des ligaments, lequel durcit dans des conditions normales et/ou par traitement thermique et/ou par irradiation avec un rayonnement électromagnétique et/ou par addition d'un catalyseur.

7. Procédé selon la revendication 5, **caractérisé en ce qu'**une pâte formée des particules et de l'agent de liaison est appliquée, couche par couche, à travers au moins une buse jusqu'à ce que la structure tridimensionnelle à ligaments comprenant les ligaments et les ouvertures en tant que canaux d'écoulement soit formée, et ensuite le revêtement comprenant une résine polymère est appliqué sur les surfaces des ligaments.
